(19)

Europäisches
Patentamt
European
Patent Office
Office européen
des brevets

(11) **EP 3 040 932 A1**

(12) **EUROPEAN PATENT APPLICATION**

(43) Date of publication:
06.07.2016 Bulletin 2016/27

(51) Int Cl.:
*G06Q 50/00* $^{(2012.01)}$

(21) Application number: **15202254.7**

(22) Date of filing: **23.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.12.2014 IL 23651114**

(71) Applicant: **Deutsche Telekom AG**
**53113 Bonn (DE)**

(72) Inventors:
• PUZIS, Rami
7748707 Ashdod (IL)
• RAPAPORT, Guy
85338 Lehavim (IL)

(74) Representative: **Lampis, Marco et al**
**Dragotti & Associati Srl**
**Via Nino Bixio, 7**
**20129 Milano (IT)**

(54) **A METHOD FOR TRACKING DISCUSSION IN SOCIAL MEDIA**

(57) The invention relates to a method for tracking discussions in social media.

The present invention defines topics across data spreads in the web and collects data from the web, group pages talking on the same topics and pinpoints the key post, which have a high influence on the online discussions.

The method of the present invention fits any document data which contains the following four features: an identifier, content, a date of publication, and references to other identified documents.

Fig. 1

**Description**

**Field Of Invention**

The invention is in the field of data communication analysis. More specifically the invention relates to a method for tracking discussions in social media.

**Background Of The Invention**

Each and every day, new content is published over the internet, and an enormous number of users are exposed to it. The content is published by individuals, companies, brands etc.

Some content is generated by ordinary users. Such are the posts in social media: blogs, online social networks, and internet forums. Other content is more official, coming from news websites and commercial pages. Some posts become highly shared, and end up drawing significant public attention and facilitate further discussions. Companies are interested in identifying such discussions at early phases and exploring them in order to adjust their campaigns and improve customer relationships. These posts can then be studied for the purpose of obtaining business intelligence, analyzed for sentiments in order to estimate the public mood, etc.

Keśelj V., Peng F., Cercone N., and Thomas C., N-gram-based author profiles for authorship attribution, Proceedings of the conference pacific association for computational linguistics, PACLING, vol. 3, pp. 255-264, (2003), uses an n-gram model to find similarity between documents, and cite this method as "language independent", with the model being "limited in size". However, the n-gram based method is used for authorship attribution and not for tracking discussions.

Ratkiewicz, Jacob, Michael Conover, Mark Meiss, Bruno Gonçalves, Alessandro Flammini, and Filippo Menczer, Detecting and Tracking Political Abuse in Social Media, In ICWSM (2011), present Klatsch, a machine learning framework to detect the early stages of viral spreading of political abuse. Klatsch uses classification algorithm for analyses users' behavior. The system detects topics by symbols provided in tweeter, builds graph that represent the flow of information through Twitter. Using classification algorithm the system can detect abuse political posts. However, Jacob et al. does not define topics across data spreads in the web and does not group pages talking on the same topics.

Goyal A., Bonchi F., Lakshmanan L.V.S., Discovering leaders from community actions, CIKM '08 Proceedings of the 17th ACM conference on Information and knowledge management, Pages 499-508 (2008), present data mining approach in social networks analysis for determining influence user called leader. Based on the frequent pattern the algorithm discovers the leaders i.e. who are the key players that likely to influence their friends. Given the log of each users actions on the social network and the social graph. The authors build influence matrix which defines which users influence on other users and they defined some influential threshold. The algorithm propagates through the graph and for each node finds other nodes which actions influenced by this node. Using the propagation algorithm they build the matrix. However, Goyal et al. does not relate to text analysis and it is not suitable for datasets in which the set of "actions" is very small or nonexistent - for instance, citation networks of scientific papers.

It is therefore a purpose of the present invention to provide a method and system for pinpointing key posts having high influence on the online discussions, which relies on text analysis and is suitable for datasets in which the set of "actions" is very small or nonexistent.

It is another purpose of the present invention to provide a method and system for visualizing the discussion development history.

It is yet another purpose of the present invention to provide a method and system for analyzing the timing and cross-references between key discussions.

Further purposes and advantages of this invention will appear as the description proceeds.

**Summary of the Invention**

The present invention is method for tracking key post, which have a high influence on online discussions, said method comprises the steps of:

> a. collecting data from the web as input records and clustering similar of said records together;

> b. detecting one or more of key post from said clustered records; and

> c. creating and visualizing a network of said detected key posts and of additional key posts.

In an embodiment of the invention, each of said input records, includes:

a unique identifier; content; date of Publication; and references to other records.

In an embodiment of the invention, the step of clustering similar records, comprises the steps of:

cleaning up said records contents and extracting n-grams;

clustering a co-occurrence network; and

collecting similar records to form respective clusters.

In an embodiment of the invention, the step of cleaning up said records contents and extracting n-grams comprises the steps of:

converting said records contents to lowercase letters;

breaking said records contents into words, while removing any non-alphabetic character;

removing stop words;

discarding words that are either too short or too long; and

bringing words to their base form, respectively.

In an embodiment of the invention, the step of clustering the co-occurrence network, comprises the steps of:

creating a reverse mapping for each record having a list of n-grams;

collecting for each n-gram, a list of records containing said n-gram, and creating an undirected weight network having a graph form.

In an embodiment of the invention, the weight network are created according to the following rules:

each n-gram is a node;

an edge connects two n-grams n1 and n2, when they appear together in at least two records;

said edge is weighted according to the formula

2/(number of records containing n1 + number of records containing n2); or

according to the count of records in which the two n-grams co-appear, and to the Jaccard index of the two n-grams.

In an embodiment of the invention, the step of collecting to clusters of similar records comprises:

a. a step of creating lists of communities of n-grams;
the steps of:

(b.1) collecting for each community of n-grams and for each n-gram, a respective set of records in which the n-gram appear;

(b.2) for each of said collected sets of records, collecting the references of that record, and outputting a bag of references associated with each community of n-grams.

In an embodiment of the invention, a reference appears more than once in a bag.
In an embodiment of the invention, the step of detecting key post from said clustered records, comprises the steps of:

calculating for each bag of community of references a TF-IDF score.

selecting for each community the reference which received a highest TF-IDF score in the respective bag of references, and defining this selected reference as a key record.

In an embodiment of the invention, more than one reference is selected to be a key record.

In an embodiment of the invention, the ratio of communities in which key records were found, out of the total number of communities, is used to evaluate the efficiency of parameters chosen for the analysis.

In an embodiment of the invention, the step of creating and visualizing a network of said detected key posts and of additional key posts, comprises the steps of:

collecting for each key record the data related to said key record;
creating a network in which each key record is a node, and an edge connecting any two key records r1, r2 when r1 references r2.

In an embodiment of the invention, the method for tracking key post, which have a high influence on online discussions further comprising the step of using a sliding window for iterative execution.

All the above and other characteristics and advantages of the invention will be further understood through the following illustrative and non-limitative description of embodiments thereof, with reference to the appended drawings.

## Brief Description of the Drawings

- Fig. 1 schematically shows the data flow of the system of the present invention;
- Fig. 2 schematically shows the architecture of the system of the present invention;
- Figs. 3 - 4 are examples of a visualization of detected key post according to an embodiment of the present invention; and
- Fig. 5 schematically describes a pseudo-code which implements the method of the present invention according to an embodiment of the invention.

## Detailed Description of Embodiments of the Invention

The present invention defines topics across data spreads in the web and collects data from the web, group pages talking on the same topics and pinpoints the key post, which have a high influence on the online discussions.

The method of the present invention fits any document data which contains the following four features: an identifier, content, a date of publication, and references to other identified documents. For instance, in a dataset of posts from social media, the identifiers are URLs and the references are hyperlinks between pages. The main output of the system of the invention is a set of important documents. Some of these documents may not even be included in the initial keyword-based search. These documents can be used in order to enrich the document-base collected for social media analysis. Finally, the present invention analyzes the timing and the cross-references between key documents and visualizes the discussion development history for the social analyst.

The two primary technical innovations of the present invention are:

(1) the application of community detection techniques (borrowed from complex networks analysis) on the co-occurrence network of word sequences in order to identify the lexicon used in the major discussion topics.

(2) The use of information extraction techniques in order to find documents which are the most representative for each one of the identified discussion topics.

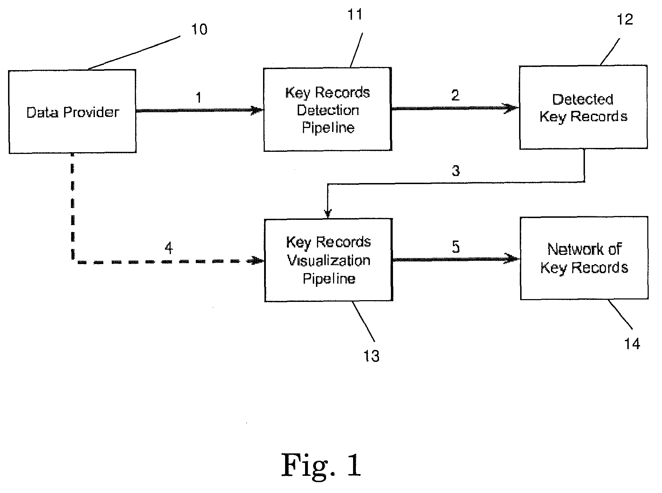

Fig. 1 Illustrates the data flow in the system of the invention according to an embodiment of the present invention.

First, in step 1, data provider 10 supplies records for the key records detection module 11. Then, in step 2, the detection module 11, outputs the detected key records 12. In step 3, the detected key records 12 are supplied as input to the visualization module 13, and in step 4, additional data for the records is obtained from the data provider 10, in case the detected key records were not a part of the initial input data. Lastly, in step 5, the visualization module 13 outputs the network of key records 14 that can be visualized.

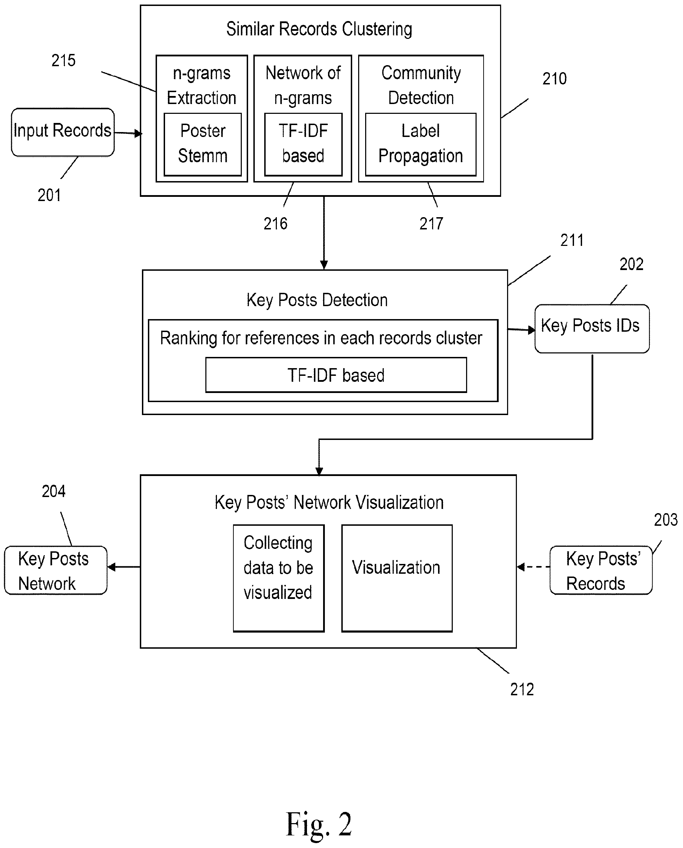

Fig. 2 schematically shows architecture of the System of the invention according to an embodiment of the present invention.

The input records 201 are inserted into the similar record clustering module 210. In the module of the similar record clustering the technique of n-grams extraction 215 is used to model similarity between documents. To model statistical significance of items in the data and create network of n-grams the technique of the TF-IDF(Term Frequency-Inverse Document Frequency) statistic 216 was used. In order to identify the common attributes of the network nodes, and group nodes having attributes similarity, by only using the information found in the graph topology, a community detection model 217 was used. The clusters (the clusters of records are the intermediate result of the system of the invention) are used as input to the second module - the key posts detection module 211, where the ranking for references in each records cluster is made using the TF-IDF technique. The output of this module 211 is the key posts IDs 202, and it is the input of the key posts network visualization module 212, which also receives as an input additional key posts records 203, in case the detected key records were not a part of the initial input records 201. In the module of the key posts network visualization 212, data that have to be visualized is collected and visualized and the output of this module 212 is the visualization of the network of key records 204.

The present invention is based on text analysis. Text analysis is a useful way to organize a large document collection by adjusting categorization scheme. There are some common techniques for text categorization that can be divided into topic-based and non-topic-base .

The present invention employs a topic-based text categorization language independent method in order to find and group web-sites which discuss on the same topic.

To model similarity between documents, an n-grams based model was used in the method of the present invention. N-grams are the sequences of words extracted from a text, each sequence of length n. For example, if n=3, the 3-grams set of the sentence "the big brown fox jumped over the lazy dog" will consist of {"the big brown", "big brown fox", ... "the lazy dog"}.

To model statistical significance of items in the data (n-grams, hyperlinks), a variant of the TF-IDF statistic was used. TF-IDF (Term Frequency-Inverse Document Frequency) reflects how important a word is to a document in a corpus. Term Frequency (TF) is the number of times a word appears in the document, while Inverse Document Frequency (IDF) is the number of times the word appears in the entire corpus. Our metric is TF-IDF - the TF value divided by the IDF value. In the present invention the TF-IDF was used in two cases. In the first case it was used to compute the significance of pairs of n-grams' co-appearances in the same documents. In the second case it was used to pinpoint the key records amongst a set of references to such records.

Community detection in graphs aims to identify the common attributes of the network nodes and group nodes having attributes similarity, by only using the information found in the graph topology.

In the present invention the edges values provide a much richer characterization of community behavior so that n-grams which relate to the same documents and have close probability of TF-IDF score, is elected to the same community.

In the present invention the label propagation based community detection algorithm was used for the communities' detection. Label propagation is an iterative algorithm, which assigns similar labels to close nodes. In the method of the present invention, nodes whose edges have close score of TF-IDF, are labeled the same. Nodes having the same label are grouped and are called community.

The method of the present invention is suitable for handling structured data that follows the following schema. Each record should include:

    1. A unique identifier;

    2. Content;

    3. Date of Publication;

    4. References to other records (i.e. a set of identifiers similar to that of the record).

The references can mention records which are not part of the input dataset.

Any input data should be preprocessed to fit the model of the method of the present invention, while different domains can be adjusted to this model. For instance, data consisting of posts from an online social media, includes the following four features:

    1. The post's URL is the unique identifier;

    2. The post's text is the content;

    3. The date of publication is the date in which the post was made;

    4. The references are the hyperlinks appearing in the post (perhaps to websites which were not collected as part of the input dataset.)

Preprocessing for data coming from the web should include link expansion, i.e. translating each URL in the references to its final form. For example, a "bit.ly" shortened link should be expanded to its final destination, so that several "bit.ly" links pointing to the same URL will not be considered as different URLs.

The model of the method of the present invention can be applied also on a data consisting of scientific papers, in that case the four features are as follows:

1. The paper's unique identifier in the corpus. For instance, its Digital Object Identifier (DOI).

2. The paper's text (or even just the abstract) is the content;

3. The date of publication is the date in which the paper was published;

4. The references are the DOIs of publications that are cited in the paper.

**Clustering Similar Records Together**

The method of the present invention for clustering documents is based on complex networks algorithms for community detection. It has three steps: (1) Cleaning up the records' contents. (2) Clustering the co-occurrence network. (3) Moving to clusters of similar records.

These steps are described in the following sections.

1. Content Clean-up and n-grams Extraction - In this step, the content, which is assumed to be textual, is cleaned up. Then, the content is broken into a sequence of words through the following steps:

a. the content is converted to lowercase letters.

b. the content is broken into words, with any non-alphabetic character removed.

c. Stop words are removed.

d. Words that are either too short or too long are discarded.

e. Words are brought to their base form (stemmed) using the Porter stemming algorithm [C.J. van Rijsbergen, S.E. Robertson and M.F. Porter, 1980. New models in probabilistic information retrieval. British Library Research and Development Report, no. 5587 (1980)]. For instance, the words 'jumping', 'jumped', 'jumps' will be reduced to the base form 'jump'.

From the sequence of words that are received in the end of step 1, n-grams are extracted. There is an option to extract k-skip n-grams and to sort the words in each n-gram.

2. Clustering the Co-Occurrence Network - For each record, there is a list of its n-grams and the reverse mapping is created. For each n-gram, a list of the records in which this n-gram appears is collected (denoted by their unique identifiers). Then, an undirected weighted network (graph) of n-grams is created.

The graph are created by the following rules:

- Each n-gram is a node,

- An edge connects two n-grams n1, n2 if they appear together in at least 2 records.

- The edge is weighted according to the TF-IDF metric, namely:

$$(2 \, / \, (\text{number of records containing } n1 + \# \text{ of records containing } n2)).$$

- Alternate weight metrics are the count of records in which the two n-grams co-appear, and the Jaccard index of the two n-grams that is, the number of records in which *both* n-grams appear together, divided by the number of documents in which *any* of the two n-grams appears.

TF-IDF ranking is a technique common in information retrieval for evaluating the relevance of documents in a corpus. Over this n-grams co-occurrence network, the Label Propagation algorithm [Usha Nandini Raghavan, Réka Albert, and Soundar Kumara, Near linear time algorithm to detect community structures in large-scale networks, Phys. Rev. E 76, 036106 (2007)] for community detection is run. This Label Propagation algorithm was chosen for its near linear-time runtime, which is an important property due to the large size of the n-grams network.

The result of the Label Propagation algorithm is a list of communities. Each community is a set of n-grams. No n-gram appears in more than a single community. Each community is considered to represent a discussion topic that can be described by the n-grams it contains.

3. Collecting clusters of similar records.

For each community of n-grams, for each n-gram, the set of records in which the n-gram appears is collected. Resulting with a set of records associated with each community of n-grams. For each such set of records, the references of each record is collected, and at the end outputs a bag of references associated with each community of n-grams. A reference may appear more than once in this bag.

At this point, in which there are sets of references (associated with communities of n-grams, i.e. with discussion topics), the next stage of the algorithm is to pinpoint the key records.

## Pinpointing the Key Records

For each community's bag of references, for each reference, the TF-IDF score is calculated: the number of times the reference appears in the bag is counted (i,e, TF, term frequency), and divided by the total number of times it appears in all the records (IDF, inverse document frequency).

Thus, for each community, the key record is chosen to be the reference which received the highest TF-IDF score in the community's bag of references. Some relaxations can be made such as selecting the top references (i.e. more than one): however, the choice must be significant. For instance, if a set of references, all received the same (maximal) TF-IDF scores, none of them is more relevant than the others, and therefore no key record will be chosen.

Some other heuristics can be used. For instance, to start the choosing of key records from the largest community down to the smallest community and to avoid choosing a reference as a key record if it has already been chosen before. Another heuristic can be to prefer records which were part of the dataset, or on the contrary - prefer records that were not part of the dataset (the results of this process may suggest which records should be collected in order to enrich the input dataset.

The ratio of communities in which key records were found, out of the total number of communities, can be used to evaluate the efficiency of the parameters chosen for the analysis.

## Creating and Visualizing the Network of Key Records

It is usually beneficial to review whether the key records are related to each other. For this purpose, the data for each of the records that were found to be key records may have to be collected (if they were not part of the input dataset). Then a network can be created according to the following rules:

- Each key record is a node; and

- An edge connects two key records r1, r2 if r1 references r2.

For such a network, its connected components can illustrate how data diffuses in the network, as they show which key records acknowledge each other (since they reference each other). That means obtaining, for each key record, all of its properties described in the data model: it's content, date of publication and references. Visualization of this network, with the node sizes reflecting how many references were found for each record in the dataset, helps an analyst to review the findings and evaluate their correctness.

## Iterative Execution using Sliding Window

The public attention changes over time. Discussion topics come and go, each with its key records that define it. When analyzing a large dataset spanning over a long period of time, key records of discussions which did not last long are considered to be a weak signal and may not appear in the final results. Nevertheless, sometimes such signals are meaningful. For instance, when analyzing data collected over a year, perhaps we will be interested in the records which got the most attention on each week. For this purpose, the algorithm can be executed iteratively over subsets of records selected using a sliding window.

Given a time window w, the data is split into batches consisting of w consecutive days. For instance, for w = 5, and the seven first days of a month, the batches will be [1-5],[2-6],[3-7]. The algorithm is executed separately for each batch. At the end, a union of all the detected key records is used for creating the network of key records.

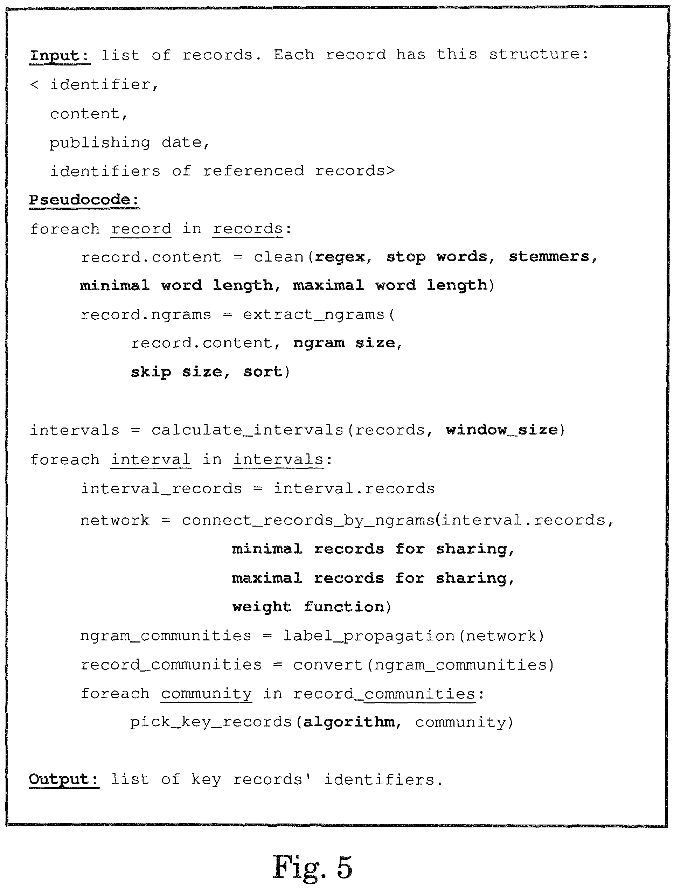

Fig. 5 schematically shows an example of a pseudo-code which implements the present invention.

In the present invention, experiments were made and data collected from social media according to given keywords was analyzed. The data was supposed to be dealing with a certain issue - and the company name used as the keywords.

The experiment findings were key posts in social media (Tweets, Facebook posts, news articles) that were heavily shared during the time when the data was collected. The present invention succeeded in identifying 3 major news stories dealing with the company that was the target of the crawl in which the data was collected.

The results of the experiments of the present invention were forwarded to domain experts (part of the company's CRM team) who acknowledged the present invention identified key posts as relevant to the public atmosphere during the timespan in which the data were collected. They also approved that said findings would have been useful to them in their work, had they received these results in real time.

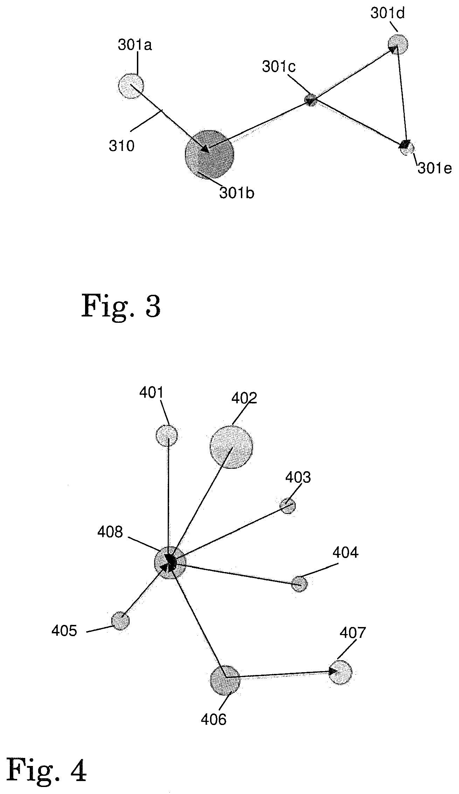

Fig. 3 schematically shows an example of a visualization of detected key posts.

The Circles 301a- 301e represent detected key posts; arrows 310 from one post for example, 301a towards a second post for example, 301b represent a hyperlink appearing in post 301a towards post 301b. The radius of a circle represents the number of references it received from posts within the dataset. Larger circles were more referenced i.e. viewed by more people.

Fig. 4 schematically shows another example of visualization.

In this example, the importance of the node on the center can be seen. Post 408 is in the center. While post 408 was not the most referenced post in the dataset, it seems that all other posts 401-406 refer to it, meaning that its posting triggered the others. A similar result can be seen in Fig. 3: post 301c is the reason why post 301b which is large and was viewed by many viewers, was published. The smaller key player, i.e. post 301a which was not view by many viewers is the source of the content, while the larger key player i.e. 301b is the facilitator, responsible for the wide spreading of the content.

## Claims

1. A method for tracking key post, which have a high influence on online discussions, said method comprises the steps of:

   a. collecting data from the web as input records and clustering similar of said records together;
   b. detecting one or more of key post from said clustered records; and
   c. creating and visualizing a network of said detected key posts and of additional key posts.

2. A method according to claim 1, wherein each of said input records, includes:

   a. a unique identifier;
   b. content;
   c. date of Publication; and
   d. references to other records.

3. A method according to claim 1, wherein the step of clustering similar records, comprises the steps of:

   a. cleaning up said records contents and extracting n-grams;
   b. clustering a co-occurrence network; and
   c. collecting similar records to form respective clusters.

4. A method according to claim 3, wherein the step of cleaning up said records contents and extracting n-grams comprises the steps of:

   a. converting said records contents to lowercase letters;
   b. breaking said records contents into words, while removing any non-alphabetic character;
   c. removing stop words;
   d. discarding words that are either too short or too long; and
   e. bringing words to their base form, respectively.

**5.** A method according to claim 3, wherein the step of clustering the co-occurrence network, comprises the steps of:

a. creating a reverse mapping for each record having a list of n-grams;
b. collecting for each n-gram, a list of records containing said n-gram, and creating an undirected weight network having a graph form.

**6.** A method according to claim 5, wherein said weight network are created according to the following rules:

a. each n-gram is a node;
b. an edge connects two n-grams n1 and n2, when they appear together in at least two records;
c. said edge is weighted according to the formula

2/(number of records containing n1 + number of records containing n2); or
according to the count of records in which the two n-grams co-appear, and to the Jaccard index of the two n-grams.

**7.** A method according to claim 3, wherein the step of collecting to clusters of similar records comprises:

(a) a step of creating lists of communities of n-grams;
(b) the steps of:

(b.1) collecting for each community of n-grams and for each n-gram, a respective set of records in which the n-gram appear;
(b.2) for each of said collected sets of records, collecting the references of that record, and outputting a bag of references associated with each community of n-grams.

**8.** A method according to claim 7, wherein a reference appears more than once in a bag.

**9.** A method according to claim 1, wherein the step of detecting key post from said clustered records, comprises the steps of:

a. calculating for each bag of community of references a TF-IDF score.
b. selecting for each community the reference which received a highest TF-IDF score in the respective bag of references, and defining this selected reference as a key record.

**10.** A method according to claim 9, wherein more than one reference is selected to be a key record.

**11.** A method according to claim 9, wherein the ratio of communities in which key records were found, out of the total number of communities, is used to evaluate the efficiency of parameters chosen for the analysis.

**12.** A method according to claim 1, wherein the step of creating and visualizing a network of said detected key posts and of additional key posts, comprises the steps of:

a. collecting for each key record the data related to said key record;
b. creating a network in which each key record is a node, and an edge connecting any two key records r1, r2 when r1 references r2.

**13.** A method according to claim 1, further comprising the step of using a sliding window for iterative execution.

Fig. 1

Fig. 2

Fig. 3

Fig. 4

```
Input: list of records. Each record has this structure:
< identifier,
  content,
  publishing date,
  identifiers of referenced records>
Pseudocode:
foreach record in records:
      record.content = clean(regex, stop words, stemmers,
      minimal word length, maximal word length)
      record.ngrams = extract_ngrams(
            record.content, ngram size,
            skip size, sort)


intervals = calculate_intervals(records, window_size)
foreach interval in intervals:
      interval_records = interval.records
      network = connect_records_by_ngrams(interval.records,
                        minimal records for sharing,
                        maximal records for sharing,
                        weight function)
      ngram_communities = label_propagation(network)
      record_communities = convert(ngram_communities)
      foreach community in record_communities:
            pick_key_records(algorithm, community)


Output: list of key records' identifiers.
```

## Fig. 5

Europäisches
Patentamt

European
Patent Office

Office européen
des brevets

## EUROPEAN SEARCH REPORT

Application Number

EP 15 20 2254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/358912 A1 (DEY KUNTAL [IN] ET AL) 4 December 2014 (2014-12-04) * paragraphs [0039] - [0041], [0056]; claims 1, 9, 10; figures 1-3 * ----- | 1-13 | INV. G06Q50/00 |
| X | WO 2012/171073 A1 (COMMW SCIENT IND RES ORG [AU]; WAN STEPHEN SI-EN [AU]; PARIS CECILE LA) 20 December 2012 (2012-12-20) * page 13, line 10 - line 25; claims 1, 4; figures 2, 3 * ----- | 1-13 | |

TECHNICAL FIELDS
SEARCHED    (IPC)

G06Q

The present search report has been drawn up for all claims

| Place of search | Date of completion of the search | Examiner |
|---|---|---|
| Munich | 21 March 2016 | Viets, Ana |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 15 20 2254

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2016

| Patent document cited in search report | Publication date | Patent family member(s) | Publication date |
|---|---|---|---|
| US 2014358912 A1 | 04-12-2014 | NONE | |
| WO 2012171073 A1 | 20-12-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEŠELJ V. ; PENG F. ; CERCONE N. ; THOMAS C.** N-gram-based author profiles for authorship attribution, Proceedings of the conference pacific association for computational linguistics. *PACLING,* 2003, vol. 3, 255-264
- **RATKIEWICZ ; JACOB ; MICHAEL CONOVER ; MARK MEISS ; BRUNO GONÇALVES ; ALESSANDRO FLAMMINI ; FILIPPO MENCZER.** Detecting and Tracking Political Abuse in Social Media. *ICWSM,* 2011

- **GOYAL A. ; BONCHI F. ; LAKSHMANAN L.V.S.** Discovering leaders from community actions. *CIKM '08 Proceedings of the 17th ACM conference on Information and knowledge management,* 2008, 499-508
- **C.J. VAN RIJSBERGEN ; S.E. ROBERTSON ; M.F. PORTER.** New models in probabilistic information retrieval. *British Library Research and Development Report,* 1980, (5587
- **USHA NANDINI RAGHAVAN ; RÉKA ALBERT ; SOUNDAR KUMARA.** Near linear time algorithm to detect community structures in large-scale networks. *Phys. Rev. E 76,* 2007